# FASCICULE DE BREVET EUROPEEN

(11) **EP 1 436 878 B1**
(45) Date de publication et mention de la délivrance du brevet: **21.12.2016**
(21) Numéro de dépôt: 02800642.7
(22) Date de dépôt: 09.10.2002
(51) Int. Cl.: H02J 7/14

(54) **ALTERNATEUR A PONT DE REDRESSEMENT, NOTAMMENT POUR VEHICULE AUTOMOBILE**
ALTERNATOR MIT GLEIRICHTERBRÜCKE, INSBESONDERS FÜR FAHRZEUG
ALTERNATOR WITH RECTIFIER BRIDGE, IN PARTICULAR FOR MOTOR VEHICLE

(30) Priorité: 09.10.2001 FR 0112959
(43) Date de publication de la demande: 14.07.2004
(73) Titulaire: VALEO EQUIPEMENTS ELECTRIQUES MOTEUR, 94017 Créteil Cedex (FR)
(72) Inventeur: MASSON, Philippe, F-77166 Grisy-Suisnes (FR); CHEMIN, Michael, F-51700 Festigny (FR); MANDION, Thierry, F-77430 Champagne sur Seine (FR)
(74) Mandataire: Gamonal, Didier
(86) Numéro de dépôt international: PCT/FR2002/003429
(87) Numéro de publication internationale: WO 2003/032465

(56) Documents cités:
- EP-A- 0 525 255
- FR-A- 2 745 445

## Description

### Domaine de l'invention

La présente invention concerne les alternateurs du type polyphasé, notamment pour véhicule automobile.

### Etat de la technique

Ainsi qu'on le sait un alternateur comporte un carter portant un rotor et un stator.

Ce stator comporte un corps sous la forme d'un paquet de tôles rainurées pour le montage d'un enroulement d'induit présentant des têtes appelées chignons s'étendant de part et d'autre du corps du stator.

L'alternateur est le plus souvent du type triphasé ou hexaphasé et comporte donc plusieurs bobinages à raison d'au moins un bobinage par phase.

Ces bobinages sont décalés angulairement et constituent l'enroulement d'induit.

Ces bobinages, de manière connue, sont connectés en triangle ou en étoile et sont reliés à un pont de redressement monté entre la masse et une borne d'alimentation positive de la batterie du véhicule.

Le rotor est solidaire d'un arbre monté à rotation dans le carter à la faveur de paliers, tels que des roulements à billes.

Le carter comporte deux parties ajourées pour circulation de l'air. L'une de ces parties est appelée palier avant, l'autre partie est appelée palier arrière. Les paliers sont métalliques et reliés à la masse du véhicule.

Le rotor comporte un bobinage d'excitation monté entre deux plateaux à griffes.

Les extrémités du bobinage d'excitation sont reliées à deux bagues collectrices sur lesquelles sont admis à frotter des balais reliés à un régulateur de tension.

L'arbre du rotor porte à son extrémité avant une poulie implantée à l'extérieur du carter et destinée à être entraînée à rotation par le moteur à combustion interne du véhicule automobile via un dispositif de transmission comportant au moins une courroie.

Le palier arrière du carter porte un porte-balais, dont les balais coopèrent avec les bagues collectrices portées par l'extrémité arrière de l'arbre du rotor.

De manière conventionnelle, le rotor porte à ses extrémités axiales des ventilateurs implantés en-dessous des chignons pour refroidir l'alternateur. En variante l'alternateur est refroidit par eau.

Lorsque lé moteur du véhicule tourne, la poulie de l'alternateur et l'arbre du rotor sont entraînés en rotation en sorte que le stator génère un courant induit alternatif ; le bobinage du rotor étant excité.

Le pont de redressement transforme le courant induit alternatif en courant continu pour charger la batterie et/ou alimenter les consommateurs.

Ce pont de redressement comporte dans une forme de réalisation des diodes et une pluralité de transistors montés en parallèles sur les diodes comme décrit par exemple dans le document FR-A-2 745 445 auquel on se reportera pour plus de précision. Les transistors sont du type MOS et constituent des interrupteurs.

Dans ce document FR-A-2 745 445 le pont de redressement est également un pont de commande car l'alternateur fonctionne de manière réversible en sorte que l'alternateur est utilisé, d'une part, comme générateur de courant et, d'autre part, comme moteur électrique pour le démarrage du moteur à combustion interne du véhicule automobile.

En mode générateur le moteur du véhicule entraîne en rotation le rotor via la poulie de l'alternateur. En mode moteur électrique le rotor entraîne en rotation le moteur du véhicule via la poulie de l'alternateur.

Un tel alternateur est appelé alterno-démarreur. Pour ce faire, il est prévu une unité électronique de commande pour la commande des transistors, qui commandent les différentes phases de l'alternateur.

Dans ce document les transistors sont avantageusement du type MOSFET en sorte qu'ils intègrent par construction une diode entre leur drain et leur source. Ils permettent de réaliser le pont de redressement et de commande des phases avec uniquement des composants transistors qui jouent le rôle à la fois d'interrupteur et de diodes de roue libre.

En mode moteur électrique on impose un courant continu dans le bobinage du rotor, constituant l'inducteur de l'alternateur, et on délivre sur les phases du stator des signaux déphasés idéalement sinusoïdaux et en variante trapézoïdaux ou carrés.

L'unité de commande comporte des moyens pour la reconnaissance d'un signal codé autorisant le démarrage du moteur à combustion interne du véhicule. Ce signal codé est transmis à l'unité de commande par des moyens d'émission à l'intérieur du véhicule.

L'unité de commande pilote les transistors MOSFET que si elle reçoit le signal codé.

Des capteurs sont prévus pour mesurer la position angulaire du rotor par rapport au stator afin de synchroniser la commande des transistors. Ces capteurs sont par exemple des capteurs magnétiques à effet Hall.

Un interrupteur, tel qu'un transistor MOSFET est commandé par l'unité de commande de manière à court-circuiter le régulateur de tension en mode moteur électrique.

Le schéma de la figure 1 illustre l'alterno-démarreur selon le document FR-A-2 745 445. Pour plus de précisions sur la structure de l'alterno-démarreur et d'une manière générale d'un alternateur on se reportera au document FR A 2 806 2236.

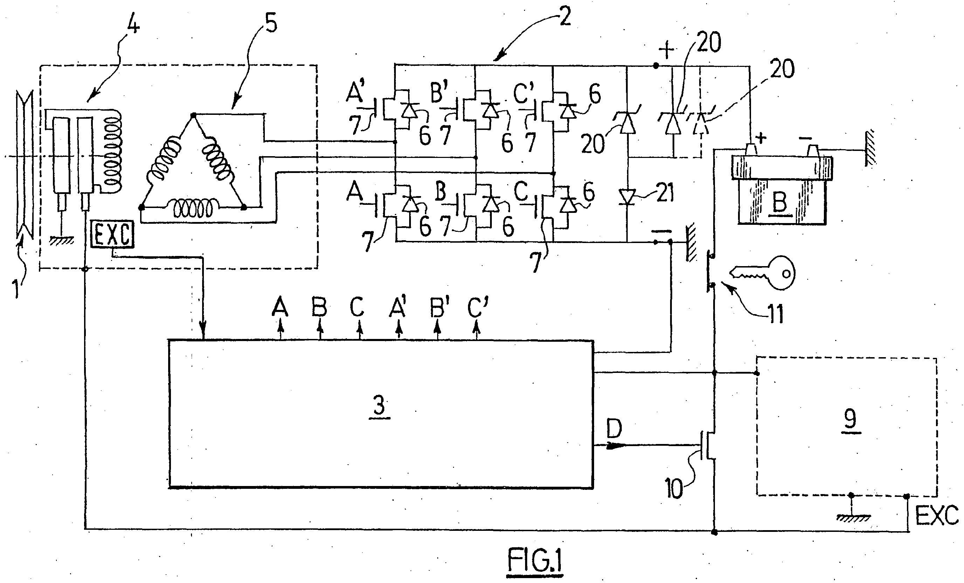

A la figure 1 on voit de manière schématique, en 1 la poulie de l'alternateur, en 4 le rotor à bobinage d'excitation, en 5 les phases du stator montées en triangle, en 2 le pont de commande et de redressement, en 3 l'unité électronique de commande, en 9 le régulateur de tension, en 10 l'interrupteur intervenant entre l'unité 3 et le régulateur 9, en B la batterie du véhicule automobile et en 11 l'interrupteur associé à la clé de contact ou à une commande électronique à carte. En variante le régulateur 9 et l'interrupteur 10 sont intégrés à l'unité 3.

Les références 6 et 7 représentent respectivement les diodes et les interrupteurs du pont de redressement et de commande intervenant entre la masse et la borne positive de la batterie B. L'unité de commande envoie des signaux A,B... sur les grilles des transistors 7.

Pour ce faire l'unité électronique de commande comporte des pilotes (driver) pour commander les transistors et envoyer sur la grille les signaux A, B... ; chaque driver étant associé à un signal A, B...

Normalement la batterie du véhicule, par l'intermédiaire de sa faible résistance interne, supprime les pics de tension qui se produisent dans le système électrique du véhicule.

Des câbles peuvent se rompre, des pertes de contact peuvent avoir lieu. Des délestages de charge appelés « load-dump » peuvent donc se produire.

Il faut donc repenser la stratégie à adopter lors d'un délestage de charge.

Cette stratégie doit autoriser une alimentation des consommateurs qui ne sont pas déconnectés, et donc autoriser un fonctionnement du pont redresseur en mode dégradé.

Bien entendu le pont redresseur doit supporter ce mode dégradé sans dommage quelle que soit sa température initiale.

La tension du réseau de bord en cas de load dump ne doit bien entendu pas dépasser une certaine valeur, par exemple 35V pour une batterie de 14V.

Par ailleurs, il est connu par le document EP0525255A un circuit pour la protection d'un transistor FET lorsqu'une augmentation de la tension drain-source de celui-ci se produit consécutivement à un délestage de charge. Le circuit détecte un accroissement de la température du transistor FET par le dépassement d'un seuil haut de température et, en réponse, commande une augmentation de la conduction de celui-ci afin de provoquer une réduction de cette tension drain-source. Une diode Zener est également prévue dans le circuit pour détecter un délestage de charge et faire commuter initialement le transistor FET en conduction.

### Objet de l'invention

La présente invention a pour objet de fournir un alternateur tel que décrit dans la revendication 1.

### Brève description des dessins

La description qui va suivre illustre l'invention en regard des dessins annexés dans lesquels :
- la figure 1 est une vue schématique d'un alternateur de l'art antérieur ;
- la figure 2 est une vue schématique d'un des interrupteurs du pont de redressement pour un premier exemple de réalisation selon l'invention ;
- la figure 3 est une vue analogue à la figure 2 pour un deuxième exemple de réalisation selon l'invention.

### Description d'exemples préférés de réalisation de l'invention

De manière précitée en cas de délestage de charge, il se produit un phénomène de surtension appelé «load-dump» au niveau du pont de redressement comportant des interrupteurs 7.

Pour pallier cet inconvénient, on peut songer à utiliser des diodes Zener 20 rajoutées sur le réseau de bord comme visible en pointillés à la figure 1.

Ces diodes sont montées en parallèle et sont associées à une diode 21 de protection en cas d'un mauvais branchement ou montage des câbles de la batterie (inversion des câbles).

L'introduction de ces diodes 20 augmente la taille du pont de redressement ainsi que le coût de celui-ci.

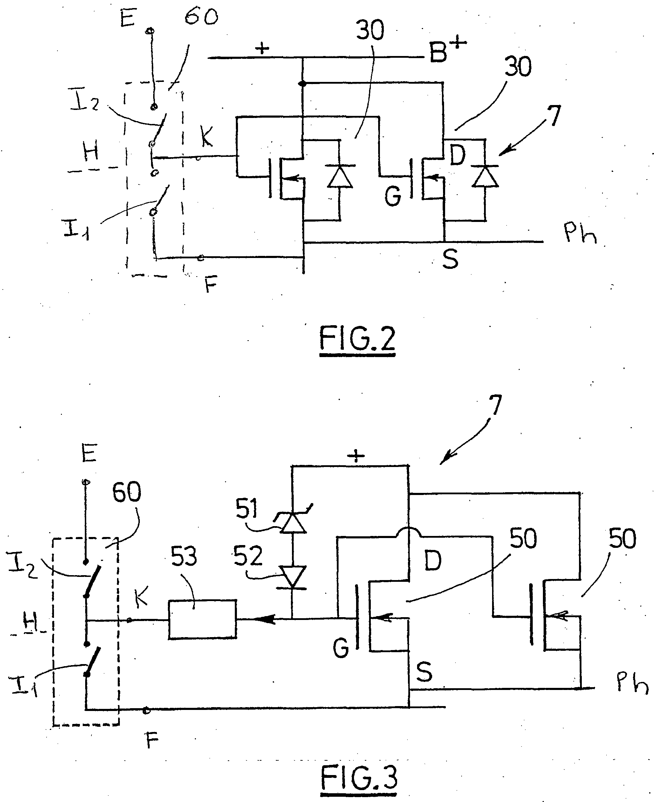

Ainsi avantageusement dans une forme de réalisation selon l'invention, on utilise à la figure 2 un pont avec des interrupteurs du type MOSFET calibré en tension pour travailler par effet d'avalanche en cas de délestage de charge. Dans cette figure comme à la figure 3, on a représenté par simplicité que l'un des interrupteurs du pont de redressement de la figure 1.

Dans ces figures 2 et 3 la référence Ph représente la phase concernée et la référence 60 le pilote (driver).

Ce driver appartient à l'unité électronique de commande et est représenté de manière schématique.

Ainsi on voit en E l'entrée d'alimentation, en F le retour d'alimentation (relié à la phase), en H l'entrée du signal de commande, et en K la sortie reliée directement (figure 2) ou indirectement (figure 3) à la grille d'un transistor respectivement 30,50 décrits ci-après. Le driver comporte des interrupteurs I2, I1.

A la figure 2 par exemple pour une tension batterie de 14V, on utilise des transistors 30 de type MOSFET, qui sont calibrés en tension entre 20V et 27V à 25°.

Cette tension calibrée est inférieure à la tension déterminée ou prédéterminée, ici de l'ordre de 35V, en cas de délestage de charge (rupture d'un câble d'alimentation par exemple).

L'écrêtage de la tension du réseau de bord sera alors garanti par les passages en avalanche des transistors MOSFET constituant les interrupteurs 7 du pont de redressement.

Ces transistors calibrés de 20 à 27V ne sont pas des composants du type standard dans l'industrie automobile, néanmoins on appréciera que le dispositif de protection contre les surtensions est économique car il ne nécessite pas d'ajouter de nouveaux composants. On appréciera également qu'il n'est pas nécessaire d'avoir une commande spécifique en cas de surtension.

Chaque interrupteur 7 du pont de redressement comporte selon les applications un ou plusieurs transistors 30 montés en parallèle. Dans une forme de réalisation on utilise quatre transistors montés en parallèle pour véhiculer le courant lors du démarrage.

A la figure 2 deux transistors 30 montés en parallèle sont prévus.

Dans un deuxième mode de réalisation, on utilise comme interrupteur des transistors 50 du type MOSFET calibrés en tension pour travailler de manière linéaire en cas de délestage de charge.

Ces transistors sont calibrés en tension, en sorte que cette tension calibrée soit voisine ou supérieure à la tension déterminée ou prédéterminée admissible en cas de délestage de charge.

A la figure 3, pour une batterie de 14V et une tension admissible déterminée ou prédéterminée, on utilise des transistors du type MOSFET 50 calibrés avec une tension supérieure ou égale à 30V pour une température de 25°.

Deux transistors 50 montés en parallèle sont ici prévus.

Avec ce type de composant la tension d'avalanche sera supérieure à 35V lorsque la température de la jonction sera supérieure à 175°C.

L'écrêtage de la tension à une valeur maximale de 35V sera garantie par la mise en conduction linéaire des MOSFET de puissance.

Le passage en fonctionnement linéaire des transistors MOSFET est réalisé à l'aide d'une diode du type Zener 51 connectée entre le drain D et la grille G du transistor 50.

Dès que la différence de potentiel entre le drain et la source du transistor MOSFET dépasse le seuil de tension de la diode Zener 51, ici de 22 V, le potentiel de la grille s'ajuste automatiquement de manière à limiter la tension VDS entre le drain et la source à une valeur proche de la tension Vz + Vth (Vz étant la tension de la diode Zener et Vth la tension entre la grille et la source du transistor 50 qui permet un déblocage du transistor MOSFET).

La tension Vth est de l'ordre de 2V. En conséquence si l'on veut une tension d'écrêtage à 24V il faut choisir une diode Zener de tension Vz égale à 22V.

Une diode 52 de protection du pilote 60 est montée tête bêche avec la diode Zener pour éviter d'une part, éviter de charger le pilote 60 lors d'une commande à l'amorçage, et, d'autre part, de commander correctement le transistor.

Une protection en limitation de courant est ajoutée sur le pilote (driver) 60 du transistor pour éviter sa destruction dans le cas où le Mosfet passe en linéaire lors de la phase de load-dump.

On voit en 53 la résistance de la grille. En cas de délestage de la charge, le pilote 60 doit être capable de supporter le courant le traversant.

A la figure 3 une différence de potentiel de 15V existe entre les points E et Fl.

Bien entendu cela dépend des applications.

Le surcoût d'un tel agencement est très faible car on rajoute des diodes Zener de faible puissance.

Le fonctionnement en régime linéaire des MOSFET autorise une aire de sécurité plus importante que lorsqu'ils opèrent en mode avalanche.

Cette solution est capable d'encaisser le plus d'énergie avec une surface du silicium identique à la solution précédente présentant le mode de fonctionnement en avalanche.

Dans les modes de réalisation des figures 2 et 3 il est au moins prévu deux transistors montés en parallèle pour diminuer les courants.

Bien évidemment ces modes de réalisation décrit ci-desssus, sont possible avec un seul transistor par interrupteur. Selon les besoins en courant ce transistor peut-être multiplié dans un montage comportant autant de transistors en parallèle qu'il est nécessaire pour véhiculer le courant à la machine lors des phases de démarrage.

Ces transistors peuvent être associés à un dispositif de démagnétisation rapide de l'alternateur pour limiter la durée de cette phase de Load-dump et donc de réduire l'énergie que devront supporter les transistors. Un tel dispositif est décrit par exemple dans le document FR A 2 802 365 auquel on se reportera pour plus de précisions. Un tel dispositif de démagnétisation rapide est plus particulièrement avantageux lorsque l'interrupteur est constitué d'un seul ou d'un nombre réduit de transistors en parallèles car ceux-ci devront supporter l'énergie du load-dump.

Bien évidemment le dispositif de limitation de tension composé de la diode Zener 51 et de la diode de protection 52 peut être implanté sur chaque composant constituant l'interrupteur. Il en est de même pour la résistance 53.

Cette invention est applicable à des tensions de bord autres que celui de 14 Volts tel que par exemple des tensions de 28 volts ou 42 Volts.

On notera dans les figures 2 et 3 la présence de deux interrupteurs I1 et I2 précités au niveau du pilote 60.

En cas de délestage de charge (load-dump) l'interrupteur I1 se ferme tandis que l'interrupteur I2 s'ouvre.

## Revendications

1. Alternateur, notamment pour véhicule automobile, comportant un rotor bobiné (4) et un stator (5) à plusieurs phases reliées à un pont de redressement et de commande (2) équipé d'interrupteurs (7) sous la forme de transistors (30) du type MOSFET, caractérisé en ce les transistors (30) du type MOSFEET sont calibrés en tension pour travailler par effet d'avalanche pour une tension calibrée inférieure à une tension déterminée ou prédéterminée en cas de délestage de charge.

2. Alternateur selon la revendication 1, **caractérisé en ce que** chaque interrupteur (7) du pont de redressement comporte plusieurs transistors (30) montés en parallèle.

3. Alternateur selon la revendication 2, **caractérisé en ce que** chaque interrupteur (7) du pont de redressement comporte deux ou quatre transistors (30) montés en parallèle.

4. Alternateur selon l'une des revendications précédentes, **caractérisé en ce que** les transistors sont calibrés en tension entre 20V a 27V à 25°C.

5. Alternateur selon l'une des revendications précédentes, **caractérisé en ce que** le pont de redressement (2) est également un pont de commande en sorte que l'alternateur est utilisé, d'une part, comme générateur de courant et, d'autre part, comme moteur électrique pour le démarrage du moteur à combustion interne d'un véhicule automobile.

## Patentansprüche

1. Wechselstromgenerator, insbesondere für ein Kraftfahrzeug, der einen gewickelten Rotor (4) und einen Stator (5) mit mehreren Phasen aufweist, die mit einer Gleichrichter- und Steuerbrücke (2) verbunden sind, die mit Schaltern (7) in Form von MOSFET-Transistoren (30) ausgestattet ist, **dadurch gekennzeichnet, dass** die MOSFET-Transistoren (30) spannungskalibriert sind, um für eine kalibrierte Spannung niedriger als eine bestimmte oder vorbestimmte Spannung im Fall eines Lastabwurfs durch Lawineneffekt zu arbeiten.

2. Wechselstromgenerator nach Anspruch 1, **dadurch gekennzeichnet, dass** jeder Schalter (7) der Gleichrichterbrücke mehrere parallel geschaltete Transistoren (30) aufweist.

3. Wechselstromgenerator nach Anspruch 2, **dadurch gekennzeichnet, dass** jeder Schalter (7) der Gleichrichterbrücke zwei oder vier parallel geschaltete Transistoren (30) aufweist.

4. Wechselstromgenerator nach einem der vorhergehenden Ansprüche, **dadurch gekennzeichnet, dass** die Transistoren zwischen 20V und 27V bei 25°C spannungskalibriert sind.

5. Wechselstromgenerator nach einem der vorhergehenden Ansprüche, **dadurch gekennzeichnet, dass** die Gleichrichterbrücke (2) ebenfalls eine Steuerbrücke ist, so dass der Wechselstromgenerator einerseits als Stromerzeuger und andererseits als Elektromotor zum Anlassen des Verbrennungsmotors eines Kraftfahrzeugs verwendet wird.

## Claims

1. Alternator, notably for a motor vehicle, comprising a wound rotor (5) and a stator (5) with several phases linked to a rectifier and control bridge (2) equipped with switches (7) in the form of transistors (30) of the MOSFET type, **characterized in that** the transistors (30) of the MOSFET type are voltage-rated to work by avalanche effect for a rated voltage lower than a determined or predetermined voltage in a load-shedding case.

2. Alternator according to Claim 1, **characterized in that** each switch (7) of the rectifier bridge comprises several transistors (30) mounted in parallel.

3. Alternator according to Claim 2, **characterized in that** each switch (7) of the rectifier bridge comprises two or four transistors (30) mounted in parallel.

4. Alternator according to one of the preceding claims, **characterized in that** the transistors are voltage-rated between 20V and 27V at 25°C.

5. Alternator according to one of the preceding claims, **characterized in that** the rectifier bridge (2) is also a control bridge such that the alternator is used, on the one hand, as current generator and, on the other hand, as electric motor for starting the internal combustion engine of a motor vehicle.
